# EUROPÄISCHE PATENTSCHRIFT

(11) **EP 3 993 447 B1**
(45) Veröffentlichungstag und Bekanntmachung des Hinweises auf die Patenterteilung: **18.09.2024**
(21) Anmeldenummer: 21202320.4
(22) Anmeldetag: 13.10.2021
(51) Int. Cl.: H04R 25/00

(54) **LADESYSTEM SOWIE LADEVORRICHTUNG FÜR EIN HÖRGERÄT**
CHARGING SYSTEM AND CHARGING DEVICE FOR A HEARING AID
SYSTÈME DE CHARGE, AINSI QUE DISPOSITIF DE CHARGE POUR UN APPAREIL AUDITIF

(30) Priorität: 23.10.2020 DE 102020213427
(43) Veröffentlichungstag der Anmeldung: 04.05.2022
(73) Patentinhaber: Sivantos Pte. Ltd., Singapore 539775 (SG)
(72) Erfinder: NIKLES, Peter, 91054 Erlangen (DE)
(74) Vertreter: FDST Patentanwälte

(56) Entgegenhaltungen:
- WO-A1-2019/037854
- GB-A- 2 569 536
- JP-A- 2015 002 580
- US-A1- 2007 104 343

## Beschreibung

Die Erfindung betrifft ein Ladesystem mit einer Ladevorrichtung sowie mit einem Hörgerät sowie weiterhin eine Ladevorrichtung für ein Hörgerät.

Unter "Hörgerät" wird allgemein ein Gerät verstanden, welches zur Aufbereitung und Darbietung von Schall oder eines Schallsignals an eine Person ausgebildet ist. Die vorliegende Erfindung betrifft speziell ein Hörhilfegerät. Hierunter wird ein Hörgerät verstanden, welches der Versorgung einer hörgeschädigten Person mit akustischen Umgebungssignalen dient. Die akustischen Umgebungssignale werden dabei zur Kompensation oder auch Therapie einer jeweiligen Hörschädigung verarbeitet und insbesondere verstärkt. Ein derartiges Hörhilfegerät besteht prinzipiell aus einem oder mehreren Eingangswandlern, aus einer Signalverarbeitungseinrichtung, einer Verstärkungseinrichtung und aus einem Ausgangswandler. Der Eingangswandler ist in der Regel ein Schallempfänger, z.B. ein Mikrofon und/oder ein elektromagnetischer Empfänger, z.B. eine Induktionsspule. Der Ausgangswandler ist in der Regel als elektroakustischer Wandler, z.B. Miniaturlautsprecher, oder als elektromechanischer Wandler, z.B. Knochenleitungshörer, realisiert. Er wird auch als Hörer oder Receiver bezeichnet. Der Ausgangswandler erzeugt Ausgangssignale, speziell Schallsignale, die zum Gehör des Patienten (hörgeschädigte Person) geleitet werden und beim Patienten eine Hörwahrnehmung erzeugen. Der Verstärker ist in der Regel in die Signalverarbeitungseinrichtung integriert. Die Stromversorgung des Hörgeräts erfolgt durch eine im Gehäuse des Hörgeräts integrierte Batterie. Üblicherweise sind (Hörgeräte-)Komponenten auf einer gedruckten Leiterplatine als Schaltungsträger angeordnet bzw. damit verbunden.

Es gibt unterschiedliche Ausführungsvarianten von Hörgeräten, insbesondere von Hörhilfegeräten. Dies sind insbesondere ITE-Hörgeräte (In-the-Ear), BTE-Hörgeräte (Behind the Ear), RiC-Hörgeräte (Receiver in Canal), CiC-Hörgeräte (Completely in Canal). Letztere gleichen den ITE-Hörgeräten, werden jedoch vollständig im Gehörgang getragen. Bei den ITE-Hörgeräten wird das Gehäuse, das sämtliche funktionale Komponenten einschließlich Mikrofon und Receiver enthält, mindestens teilweise im Gehörgang getragen. Speziell ITE- oder auch CiC-Hörgeräte weisen daher eine sehr kleine Bauform auf.

Hörgeräte, speziell Hörhilfegeräte, weisen häufig eine Antennenanordnung auf, die beispielsweise zur drahtlosen Übertragung von Datensignalen oder akustischen Signalen dient. Die Antennenanordnungen können für unterschiedliche Einsatzzwecke vorgesehen sein. Beispielsweise dient die Antennenanordnung zur drahtlosen Kommunikation mit einem weiteren Gerät, beispielsweise mit einem weiteren Hörhilfegerät im Falle einer binauralen Versorgung. Darüber hinaus kann eine derartige Antennenanordnung auch zur drahtlosen Kommunikation mit einem sonstigen externen Gerät, beispielsweise einem Abspielgerät für Musik und Sprache, ausgebildet sein. Darüber hinaus kann die Antennenanordnung auch für ein drahtloses, insbesondere induktives Laden einer Batterie des Hörhilfegeräts eingesetzt sein. Aufgrund der begrenzten Platzverhältnisse ist im Falle einer Antennenanordnung häufig eine Abschirmung zwischen der Antennenanordnung und weiteren elektrischen Komponenten erforderlich und gewünscht, um eine unerwünschte wechselseitige Störung zu vermeiden.

Aus der GB 2 569 536 A ist eine induktive Energieversorgung für ein Hörgerät zu entnehmen, bei dem um einen Lautsprecher eine Ferrit-Lage sowie eine Ladespule angeordnet sind.

Aus der US 2007/104343 A1 ist ein Hörgerät mit einem Ladegerät zum induktiven Laden zu entnehmen, welches eine Aufnahme für das Hörgerät aufweist.

Aus der WO 2019/037854 A1 ist ein Ladegerät zum induktiven Laden für ein Hörgerät zu entnehmen, bei dem mittels Magnete das Hörgerät in einer gewünschten Position gehalten wird.

Aus der JP 2015 002580 A sind Magnete zum Ausrichten eines Hörgeräts bezüglich eines Ladegeräts zu entnehmen.

In der nachveröffentlichten DE 10 2019 217 861 B3 der Anmelderin wird ein Hörgerät, insbesondere ein ITE-Hörgerät mit einer speziellen, platzsparenden Antenne mit hoher Effizienz beschrieben. Bei diesem Hörgerät ist in einem vorderen Teilbereich eines Gehäuses der Hörer, ausgebildet als elektroakustischer Wandler, angeordnet. Um den Hörer ist zumindest bereichsweise eine magnetische Lage, insbesondere in Form einer Ferritfolie angeordnet, um die wiederum eine die Antenne ausbildende sekundäre Wicklung gewickelt ist. Die magnetische Lage ist insbesondere durch einzelne Laschen gebildet und erstreckt sich über den Hörer hinaus in einen erweiterten Gehäusebereich des Gehäuses. In diesem erweiterten Gehäusebereich sind weitere funktionelle Bauteile des Hörgeräts angeordnet, speziell Komponenten zur Signalverarbeitung. Die darin beschriebenen, um den Hörer herum angeordnete sekundäre Wicklung kann zur induktiven Ladung der Batterie des Hörgeräts herangezogen werden.

Bei drahtlosen, insbesondere induktiven Ladevorgängen wird allgemein eine möglichst gute Kopplung zwischen einer primär Ladewicklung und einer sekundären Ladewicklung angestrebt, um Ladeverluste möglichst gering zu halten.

Ausgehend hiervon liegt der Erfindung die Aufgabe zugrunde, für ein Hörgerät, insbesondere für ein ITE-Hörhilfegerät und speziell für das in der DE 10 2019 27861.8 beschriebene Hörgerät ein möglichst effizientes induktives Laden mit einem einfachen Aufbau zu ermöglichen.

Die Aufgabe wird gemäß der Erfindung gelöst durch ein Ladesystem mit einer Ladevorrichtung sowie mit einem Hörgerät, insbesondere ein Hörhilfegerät, wobei das Hörgerät einen vorderen Teilbereich aufweist, in dem eine sekundäre Ladewicklung angeordnet ist. Die Ladevorrichtung weist ein Ladegehäuse mit einem Aufnahmeraum auf, der sich entlang einer Mittenachse in einer Längsrichtung erstreckt und der in Längsrichtung zumindest zu einer Seite hin eine Öffnung aufweist. Weiterhin weist die Ladevorrichtung eine primäre Ladewicklung auf, welche um die Mittenachse umlaufend ausgebildet ist und einen Innenraum umgibt. Das Hörgerät ist mit seinem vorderen Teilbereich in den Innenraum einsetzbar. Im eingesetzten Zustand ist die sekundäre Ladewicklung daher innerhalb der primären Ladewicklung angeordnet und von dieser umgeben.

Durch diese Ausgestaltung einerseits des Hörgeräts und andererseits der Ladevorrichtung lässt sich daher in einfacher Weise das Hörgerät quasi in die Ladevorrichtung einstecken und zwar derart, dass automatisch die beiden Ladewicklungen koaxial zueinander ausgerichtet werden und dadurch eine besonders wirksame Kopplung und damit eine besonders wirksame Energieübertragung gewährleistet ist.

Bei den beiden Ladewicklungen handelt sich allgemein um Spulen, die in Längsrichtung betrachtet eine Spulen- oder Wicklungslänge aufweisen. Bei der primären Ladewicklung handelt sich also um eine Hohlspule, in die die sekundäre Ladewicklung eingesteckt wird.

Die primäre Ladewicklung ist beispielsweise im Inneren des Aufnahmeraums angeordnet. Sie ist typischerweise über eine Stützstruktur mit dem Ladegehäuse verbunden und fixiert. Beispielsweise ist bodenseitig ein Stützelement angeordnet und/oder es ist zumindest ein sich von einer Seitenwandung erstreckender radialer Haltearm ausgebildet, welcher die primäre Ladewicklung hält. Die primäre Ladewicklung ist beispielsweise allgemein auf einem zylinderförmigen Träger aufgewickelt, über den die mechanischen Haltekräfte über die Stützstruktur abgefangen werden. Über die Stützstruktur erfolgt insbesondere auch der elektrische Anschluss der beiden Wicklungsenden. Alternativ zu einer im Inneren des Aufnahmeraums angeordneten Stützstruktur ist die primäre Ladewicklung beispielsweise in einer den Aufnahmeraum begrenzenden Wandung eingebettet, beispielsweise eingegossen.

Allgemein ist weiterhin eine Ladesteuerung in der Ladevorrichtung und / oder im Hörgerät vorgesehen, die den Ladevorgang steuert. Im Hörgerät ist weiterhin eine wiederaufladbare Batterie angeordnet.

Das Hörgerät weist weiterhin eine Komponente auf, um die die sekundäre Ladewicklung angeordnet ist. Bevorzugt ist die sekundäre Ladewicklung nach Art einer Spule um die Kompnente gewickelt. Bei der Komponente handelt es sich insbesondere um eine elektrische oder elektromagnetische Komponente. Bevorzugt ist die Komponente ein Hörer, welcher speziell als ein elektroakustischer Wandler und damit zur Schallabgabe ausgebildet ist.

An den Hörer schließt sich typischerweise ein Schallkanal oder Schallaustrittsstutzen an, welcher an einem Ende des Hörgerätes ausgebildet ist. Speziell bei einem ITE-Hörgerät ist der Hörer im vorderen Teilbereich angeordnet, welcher einen endseitigen Teilbereich definiert und insbesondere verjüngt ausgebildet ist, sodass er in den Gehörgang eines Nutzers eindringen kann. Dieser verjüngte und damit in etwa domartige Teilbereich des Gehäuses wird daher in den Innenraum der primären Ladewicklung eingesteckt.

Das Ladesystem weist weiterhin zumindest eine magnetische Lage auf, nämlich eine primäre magnetische Lage. Bevorzugt ist weiterhin eine sekundäre magnetische Lage vorgesehen.

Die primäre magnetische Lage erstreckt sich um die primäre Ladewicklung herum, und zwar vorzugsweise vollständig umlaufend um die primäre Ladewicklung. Sie verläuft insbesondere an oder in einer umlaufenden Wandung des Aufnahmeraums.

Durch diese primäre magnetische Lage werden auf Seiten der Ladevorrichtung die Magnetfeldlinien und damit der magnetische Fluss definiert und damit möglichst verlustfrei geführt, was zu dem angestrebten Ladevorgang mit möglichst großer Effizienz beiträgt.

Die sekundäre magnetische Lage ist zwischen der Komponente und der sekundären Ladewicklung angeordnet ist. Speziell handelt es sich bei dieser magnetischen Lage um eine Folienlage. Bevorzugt ist ergänzend noch eine elektrische Schirmlage angeordnet, die zusammen mit der magnetischen Lage beispielsweise als mehrlagige, insbesondere zweilagige Folie ausgebildet ist. Der besondere Vorteil der Anordnung der magnetischen Lage insbesondere auch in Kombination mit der elektrischen Schirmlage ist darin zu sehen, dass beim Ladevorgang über die magnetische Lage die magnetischen Feldlinien und damit das magnetische Feld zielgerichtet geführt wird. Gleichzeitig ist durch die sekundäre magnetische Lage insbesondere auch in Kombination mit der sekundären elektrischen Schirmlage eine Abschirmung und damit ein Schutz der Komponente erreicht. Diese ist daher durch die sekundäre magnetische Lage vor dem magnetischen Feld beim Ladevorgang geschützt.

Sofern vorliegend von einer magnetischen Lage gesprochen wird, so wird hierunter eine Lage verstanden, welche aus einem magnetisch permeablen Material besteht oder dieses aufweist. Die Permeabilitätszahl der magnetischen Lage ist zumindest größer 1, sodass das Material zumindest paramagnetisch ist. Vorzugsweise ist die Permeabilitätszahl viel größer als 1 (zumindest 5, vorzugsweise zumindest 10), sodass das permeable Material allgemein ferromagnetisch oder ferrimagnetisch ist. Die Permeabilitätszahl liegt vorzugsweise im Bereich zwischen 40 und 700 und insbesondere im Bereich zwischen 100 und 300. Bei der magnetischen Lage handelt es sich beispielsweise um eine geeignete Folienlage oder alternativ um einen beispielsweise gegossenen oder gespritzten Körper, der aus dem magnetisch permeablen Material besteht oder dieses zumindest aufweist.

Gemäß einer bevorzugten Ausgestaltung erstreckt sich das Hörgerät entlang einer Geräte-Längsrichtung, die vorzugsweise zugleich auch die Längsrichtung der Komponente und speziell des Hörers angibt. Das Hörgerät weist ein Gehäuse auf, welches sich in Richtung dieser Geräte-Längsrichtung verbreitert und dort - nachfolgend zu dem vorderen Teilbereich - einen erweiterten Gehäusebereich aufweist. Dieser weist eine erste radiale Ausdehnung auf, die größer als eine zweite radiale Ausdehnung, speziell ein Durchmesser der Öffnung des Ladegehäuses ist, sodass das Hörgerät im eingesetzten Zustand in der Ladevorrichtung auf einem Öffnungsrand der Öffnung aufliegt. Allgemein ist die Ladevorrichtung an das Hörgerät derart angepasst, dass dieses nur mit seinem vorderen Teilbereich in den Aufnahmeraum eindringt und mit einem rückwärtigen Gehäusebereich auf dem Öffnungsrand zum Aufliegen kommt. Dadurch ist eine relative axiale Position zwischen Hörgerät und Ladevorrichtung definiert, was dafür sorgt, dass die beiden Ladewicklungen in einer definierten axialen Relativposition zueinander angeordnet sind. Diese ist dabei speziell derart gewählt, dass eine maximale axiale Überlappung zwischen den beiden Ladewicklungen erreicht ist. Es erfolgt also insofern eine axiale Selbstzentrierung.

Bevorzugt sind zudem das Gehäuse des Hörgeräts sowie das Ladegehäuse insbesondere im Bereich der Öffnung derart einander angepasst, dass zugleich auch eine radiale Selbstzentrierung erfolgt. Alternativ zu einer radialen Selbstzentrierung über die Öffnung erfolgt die radiale Selbstzentrierung durch eine möglichst komplementäre Ausgestaltung zwischen dem vorderen Teilbereich und dem von der primären Ladewicklung umgebenen Innenraum. Die primäre Ladewicklung ist beispielsweise auf einem hohlen Träger aufgewickelt, in den der vordere Teilbereich des Hörgerätes zum Laden eingesteckt wird.

In bevorzugter Weiterbildung erstreckt sich die sekundäre magnetische Lage in Geräte-Längsrichtung über die Komponente hinaus in den erweiterten Gehäusebereich hinein. Die magnetische Lage weitet sich bevorzugt auf und verläuft entlang oder zumindest nahe der sich erweiternden Gehäusewand im erweiterten Gehäusebereich. Die magnetische Lage ist bevorzugt durch mehrere streifenförmige Laschen gebildet oder weist solche auf. Über diese magnetische Lage und die einzelnen Laschen werden die Magnetfeldlinien und damit der magnetische Fluss beim Ladevorgang definiert geführt.

Bevorzugt weist die sekundäre magnetische Lage eine höhere Permeabilitätszahl auf als die primäre magnetische Lage der Ladevorrichtung. Die Permeabilitätszahl ist beispielsweise zumindest um den Faktor 1,5 größer.

Die Permeabilitätszahl wird häufig in Abhängigkeit der Frequenz gewählt, für die die jeweilige Wicklung ausgelegt ist, wobei mit höherer Frequenz geringere Permeabilitätszahlen eingesetzt werden. Die sekundäre Ladewicklung auf Seite des Hörgeräts wird typischerweise neben dem Laden auch für weitere Funktionen, wie beispielsweise für eine drahtlose Kommunikation, beispielsweise bei binauralen Hörgeräten eingesetzt. Hierbei werden Kommunikationsfrequenzen typischerweise im Megahertz-Bereich insbesondere im Bereich von etwa 3 MHz oder 10 MHz eingesetzt. Auch können Frequenzen im Bereich zwischen einigen 100 MHz und einigen 1000 MHz eingesetzt werden. Beim Laden wird häufig typischerweise eine geringere Frequenz, beispielsweise im Bereich von typischerweise 10² kHz eingesetzt. Daneben gibt es auch Ladekonzepte mit Frequenzen im zweistelligen MHz-Bereich, z.B. über RFID bei 13,56 MHz oder auch mit höheren Frequenzen z.B. bei 26 MHz.

Ein Vorteil der höheren Permeabilitätszahl der sekundären magnetischen Lage ist insbesondere darin zu sehen, dass ein Abstand zwischen der primären Ladewicklung und der primären magnetischen Lage gering gehalten werden kann und zugleich gesichert ist, dass der magnetische Fluss über die sekundäre magnetische Lage und damit durch die sekundäre Ladewicklung hindurch fließt.

Die primäre magnetische Lage bildet bevorzugt eine Innenseite des Aufnahmeraums aus, kleidet diesen daher insofern aus bzw. bedeckt diesen. Gemäß einer Ausführungsvariante ist dabei der gesamte Aufnahmeraum von der magnetischen Lage ausgekleidet.

In bevorzugter Ausgestaltung ist die magnetische Lage in radialer Richtung, also senkrecht zur Längsrichtung von der primären Ladewicklung beabstandet. Der Abstand ist dabei ausreichend groß bemessen, sodass beim Ladevorgang sichergestellt ist, dass der magnetische Fluss durch den Innenraum der sekundären Ladewicklung hindurch geführt ist. Der Abstand liegt beispielsweise zwischen 0,3 cm bis 1,5 cm oder auch bis 2 cm.

In bevorzugter Ausgestaltung ist die primäre magnetische Lage an einem Öffnungsrand der Öffnung ausgebildet. Bei dieser Ausgestaltung wird - insbesondere in Kombination mit der sekundären magnetischen Lage, die sich in den erweiterten Gehäusebereich des Hörgeräts hinein erstreckt - der besondere Vorteil erzielt, dass am Öffnungsrand die beiden magnetischen Lagen in unmittelbarer Nähe zueinander angeordnet sind, sodass der magnetische Fluss weitgehend vollständig über die magnetischen Lagen und möglichst wenig über Luft geführt ist.

Vorzugsweise bildet die primäre magnetische Lage am Öffnungsrand einen Ringflansch aus, sodass ein stirnseitiger Rand im Bereich der Öffnung mit der magnetischen Lage überdeckt ist.

In bevorzugter Weiterbildung ist zwischen der primären Ladewicklung und der primären magnetischen Lage eine elektrisch leitfähige Lage angeordnet. Diese besteht aus oder weist auf ein Metall mit hoher elektrischer Leitfähigkeit, speziell Kupfer. Diese elektrisch leitfähige Lage ist ringförmig um die primäre Ladewicklung herum angeordnet. Speziell begrenzt sie eine Innenseite des Aufnahmeraums und ist beispielsweise auf die primäre magnetische Lage aufgebracht. Diese leitfähige Lage bildet eine Art Schirmlage aus, die eine Art "Kurzschluss" des magnetischen Flusses verhindert und sicherstellt, dass dieser durch das Innere der sekundären Ladewicklung hindurch fließt. Die leitfähige Lage ist zumindest auf der axialen Höhe der primären Ladewicklung angeordnet und erstreckt sich in Längsrichtung vorzugsweise über eine axiale Länge, die der axialen Länge der primären Ladewicklung (Wicklungslänge) entspricht. Bevorzugt erstreckt sich die leitfähige Lage nur im Bereich der primären Ladewicklung. Die axiale Länge der leitfähigen Lage liegt beispielsweise im Bereich des 0,7 -fachen bis 2-fachen der Wicklungslänge der primären Ladewicklung.

Die elektrisch leitfähige Lage ist weiterhin bevorzugt als ein offener Ring oder offener Mantel ausgebildet. Hierunter wird verstanden, dass die leitfähige Lage umlaufend um die Mittenachse angeordnet ist, ihre Endbereiche jedoch nicht miteinander verbunden sind, d.h. die leitfähige Lage ist in Umfangsrichtung elektrisch nicht geschlossen. Hierdurch wird das Entstehen von Wirbelströmen in dieser Lage vermieden. Die elektrisch leitfähige Lage ist bevorzugt als Folie ausgebildet. Sie erstreckt sich beispielsweise über einen Winkelbereich von zumindest 300° und vorzugsweise über zumindest 350°, so dass ein Spalt in Umfangsrichtung ausgebildet ist. Alternativ hierzu überlappen sich die Endbereiche der Folie, ohne jedoch elektrisch miteinander verbunden zu sein. Im Überlappbereich sind die Endbereiche daher zueinander elektrisch isoliert. Eine solche Ausführungsvariante ist insbesondere bei niedrigen Frequenzen, beispielsweise im Bereich von 10² kHz eingesetzt.

In einer bevorzugten Ausgestaltung ist die primäre magnetische Lage im Bereich der primären Ladewicklung in Längsrichtung betrachtet unterbrochen. Die Unterbrechung weist dabei eine axiale Länge auf, die vorzugsweise an die axiale Wicklungslänge der primären Ladewicklung angepasst ist. Insbesondere erstreckt sich diese Unterbrechung zwischen dem 0,7-fachen und dem 2-fachen der Wicklungslänge. Diese Unterbrechung ist dabei insbesondere alternativ zu der leitfähigen Lage oder auch in Kombination mit dieser angeordnet. Sowohl die Unterbrechung als auch die leitfähige Lage dienen dem Zweck, den Abstand zwischen der primären Ladewicklung und der Innenseite des Aufnahmeraums, an der die primäre magnetische Lage ausgebildet ist, möglichst gering zu halten, ohne dass die Gefahr des zuvor beschriebenen "magnetischen Kurzschlusses" besteht.

In zweckdienlicher Ausgestaltung weist das Ladegehäuse weiterhin einen Boden auf, ist also insoweit topfförmig ausgebildet. Bei der Ausführungsvariante mit der primären magnetischen Lage überdeckt diese vorzugsweise auch den Boden. Die magnetische Lage selbst ist daher ebenfalls in bevorzugter Ausgestaltung topfförmig ausgebildet und quasi in den topfförmigen Aufnahmeraum hineingesetzt, bzw. kleidet diesen aus.

Bei der Ausführungsvariante mit der Unterbrechung der primären magnetischen Lage ist diese allgemein 2-teilig mit einem Unterteil und einem Oberteil ausgebildet. Bei der Ausführungsvariante mit dem Boden ist das Unterteil wiederum topfförmig ausgebildet, an das sich in Längsrichtung beabstandet das Oberteil mantelförmig anschließt und insbesondere bis zur Öffnung reicht. Bei der Ausführungsvariante mit dem Ringflansch weist dieses Oberteil ergänzend noch den Ringflansch auf.

In zweckdienlicher Ausgestaltung ist die Geometrie des Aufnahmeraums bevorzugt an die Geometrie des Hörgerätes, speziell des vorderen Teilbereiches des Hörgerätes angepasst. Hierunter wird insbesondere verstanden, dass die Innenkontur des Aufnahmeraums der Außenkontur des vorderen Teilbereichs des Hörgeräts folgt.

Ins besonders bevorzugter Ausgestaltung ist vorgesehen, dass sich der Aufnahmeraum in Längsrichtung aufweitet, insbesondere im Bereich der Öffnung. In diesem aufgeweitete Endbereich verläuft dabei die Innenwandung vorzugsweise parallel zu der Gehäusewandung des erweiterten Gehäusebereichs des Hörgerätes.

Bevorzugt weist der Aufnahmeraum zum Boden hin eine Verjüngung auf. Durch diese Maßnahme wird beim Ladevorgang die Kopplung zwischen den beiden Wicklungen weiter verbessert.

Die Aufgabe wird gemäß der Erfindung weiterhin gelöst durch eine Ladevorrichtung für ein Hörgerät, wobei die Ladevorrichtung ein Ladegehäuse mit einem Aufnahmeraum aufweist, der sich entlang einer Mittenachse in einer Längsrichtung erstreckt und der in Längsrichtung zumindest zu einer Seite eine Öffnung aufweist, über die das Hörgerät zumindest teilweise in den Aufnahmeraum einsetzbar ist. Die Ladevorrichtung weist weiterhin eine primäre Ladewicklung auf, welche um die Mittenachse umlaufend ausgebildet ist und einen freien Innenraum umgibt, derart, dass das Hörgerät mit einem vorderen Teilbereich in den Innenraum einsetzbar ist. Die Ladevorrichtung weist weiterhin eine primäre magnetische Lage auf, welche sich um die primäre Ladewicklung herum erstreckt.

Die im Hinblick auf das Ladesystem angeführten Vorteile und bevorzugten Ausgestaltungen gelten gleichermaßen für die Ladevorrichtung und sind sinngemäß auf diese zu übertragen.

Ausführungsbeispiele der Erfindung werden nachfolgend anhand der Figuren naher erläutert. Diese zeigen teilweise stark vereinfachten Darstellungen:
- Figur 1: eine Schnittansicht durch ein Ladesystem gemäß einer ersten Variante welche nicht unter den Schutzumfang der Ansprüche fällt mit vereinfacht dargestellter Ladevorrichtung und vereinfacht und nur ausschnittsweise dargestellten Komponenten eines Hörgerätes,
- Figur 2: eine vereinfachte Darstellung von Komponenten des Hörgeräts in Relation zu einer primären Ladewicklung,
- Figur 3: eine vereinfachte rudimentäre Darstellung eines Hörgeräts,
- Figur 4: eine Schnittdarstellung durch ein Ladesystem ähnlich Figur 1 gemäß einer zweiten Ausführungsvariante,
- Figur 5: eine Schnittansicht durch ein Ladesystem ähnlich Figur 1 gemäß einer dritten Ausführungsvariante,
- Figur 6: eine Schnittdarstellung durch ein Ladesystem ähnlich Figur 1 gemäß einer vierten Ausführungsvariante sowie
- Figuren 7A-7C: unterschiedliche vereinfachte Schnittansichten eines Ladegehäuses der Ladevorrichtung.

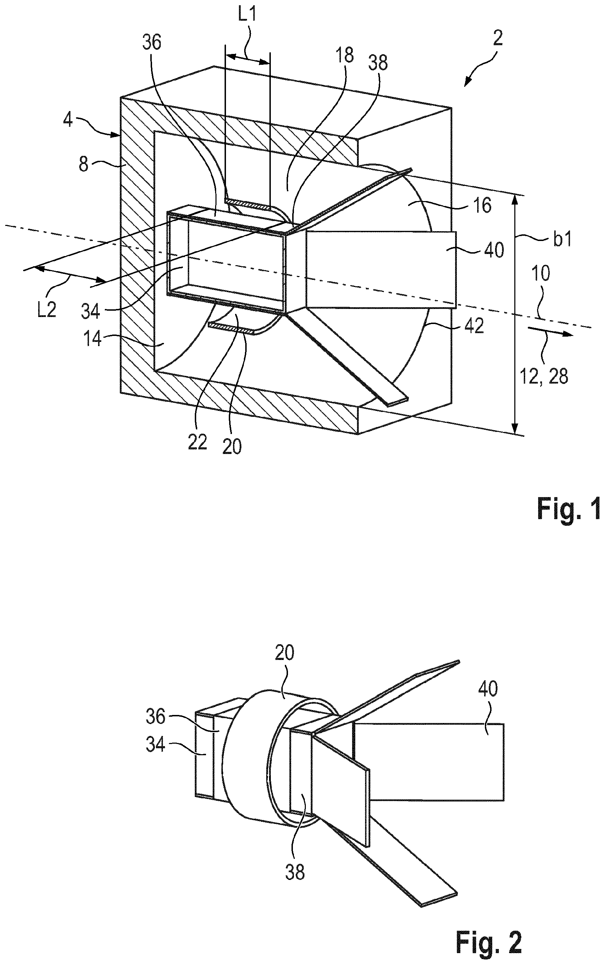

In den Figuren sind gleich wirkende Teile mit den gleichen Bezugszeichen versehen. Das in den Figuren 1 sowie 4-6 dargestellte Ladesystem 2 weist jeweils eine Ladevorrichtung 4 sowie ein Hörgerät 6 auf. Die Ladevorrichtung 4 weist allgemein ein Ladegehäuse 8 auf, welches im Ausführungsbeispiel topfförmig ausgebildet ist. Das Ladegehäuse 8 weist eine Wandung auf, die typischerweise aus Kunststoff besteht. Das Ladegehäuse 8 erstreckt sich entlang einer Mittenachse 10 in Längsrichtung 12. Es weist einen Boden 14 und gegenüberliegend hierzu eine Öffnung 16 auf. Das Ladegehäuse 8 weist umlaufend um die Mittenachse 10 eine Wandung auf, die einen Aufnahmeraum 18 einschließt. Im Ausführungsbeispiel wird dieser entgegen der Längsrichtung 12 vom Boden 14 begrenzt. Im Ausführungsbeispiel ist der Aufnahmeraum 18 zylindrisch ausgebildet. Alternativ hierzu ist er von der zylindrischen Form abweichend und insbesondere an eine Geometrie des Hörgeräts 6 angepasst.

Die Ladevorrichtung 4 weist weiterhin eine primäre Ladewicklung 20 auf, welche nach Art einer Spule ausgebildet ist und sich um die Mittenachse 10 herum erstreckt und in Längsrichtung 12 ausgerichtet ist. Die primäre Ladewicklung 20 umgibt einen Innenraum 22. Sie weist in Längsrichtung 12 eine primäre Wicklungslänge L1 auf. Diese primäre Ladewicklung 20 ist über eine hier nicht näher dargestellte Stützstruktur innerhalb des Ladegehäuses 8 fixiert. Über diese Stützstruktur erfolgt vorzugsweise auch die elektrische Anbindung von Wicklungsenden der primären Ladewicklung 20. Die Ladevorrichtung 4 und das Hörgerät 6 weisen weiterhin für den Ladevorgang erforderliche Komponenten auf, wie beispielsweise Ladesteuerung, eine Stromversorgung usw., die vorliegend nicht dargestellt sind.

Die Ladevorrichtung 4 dient zum induktiven Laden einer hier nicht näher dargestellten Batterie im Hörgerät 6.

Bei dem Hörgerät 6 handelt sich insbesondere um ein ITE-Hörgerät, welches vorzugsweise individuell an einen jeweiligen Nutzer angepasst ist. Das Hörgerät 6 weist ein Gehäuse 24 auf, welches insoweit nutzerspezifisch ausgebildet ist. Das Gehäuse 24 zeichnet sich allgemein durch einen vorderen, sich verjüngenden Teilbereich 26 aus, an den sich in einer Geräte-Längsrichtung 28 ein erweiterter Gehäusebereich 30 anschließt. Stirnseitig am vorderen Teilbereich 26 ist ein Schallaustrittskanal oder eine Schallaustrittsöffnung 32 ausgebildet. Im vorderen Teilbereich 26 ist ein Hörer 34 angeordnet, welcher sich in Geräte-Längsrichtung 28 erstreckt. Der Hörer 34 gibt zur Schallaustrittsöffnung 32 im Betrieb Schall ab.

Der Hörer 34 ist von einer sekundären Ladewicklung umwickelt. Diese weist eine sekundäre Wicklungslänge L2 auf, die sich in Geräte-Längsrichtung 28 erstreckt.

Zwischen dem Hörer 34 und der sekundären Ladewicklung 36 ist eine sekundäre magnetische Lage 38 angeordnet. Diese umgibt den Hörer 34 Umfangsrichtung vorzugsweise vollständig oder zumindest nahezu vollständig. In Geräte-Längsrichtung 28 erstreckt sich die sekundäre magnetische Lage 38 dabei weiterhin in den erweiterten Gehäusebereich 30 hinein. Die sekundäre magnetische Lage 38 weist hierzu insbesondere Laschen 40 auf, die sich über den Hörer 34 hinaus erstrecken und sich aufweiten. Insbesondere sind insgesamt vier Laschen 40 vorgesehen, die jeweils von einer Quaderseite des Hörers 34 ausgehen. Die einzelnen Laschen 40 schließen zwischen sich einen Zwischenraum ein, in dem weitere Komponenten des Hörgeräts, wie beispielsweise die Batterie, eine Signalverarbeitungseinheit usw. angeordnet sind.

An dem der Schallaustrittsöffnung 32 gegenüberliegenden Ende weist das Gehäuse 24 eine weitere Öffnung auf, in die typischerweise ein Komponententräger, eine sogenannte Faceplate eingesetzt ist. Bei der sekundären magnetischen Lage 38 und insbesondere auch den Laschen 40 handelt sich insbesondere um eine Folie, insbesondere Ferrit-Folie. Zweckdienlicherweise ist eine mehrlagige Folie vorgesehen, mit einer metallischen Lage und der darauf angebrachten magnetischen Lage 38. Bei der metallischen Lage handelt sich insbesondere um eine Kupferlage.

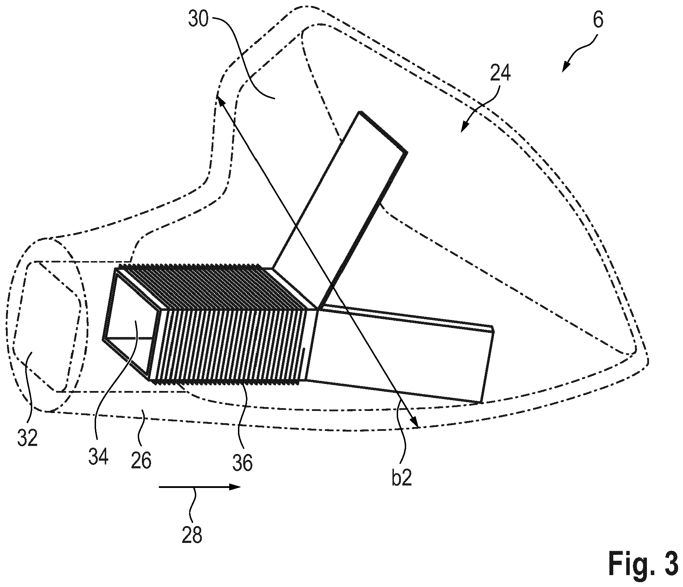

Das in der Figur 3 dargestellte Hörgerät 6 wird zum Laden mit dem vorderen Teilbereich 26 in den Aufnahmeraum 18, insbesondere in den Innenraum 22 eingesteckt. Da im vorderen Teilbereich die sekundäre Ladewicklung 36 angeordnet ist, wird zwischen der primären Ladewicklung 20 und der sekundären Ladewicklung 36 eine definierte Relativposition eingenommen. Diese Situation ist in der Figur 2 dargestellt. Anhand dieser ist zu erkennen, dass die beiden Ladewicklungen 20,36 koaxial zueinander angeordnet sind. Durch diese Anordnung wird beim Ladevorgang eine sehr gute induktive Koppelung erreicht, sodass eine effiziente Energieübertragung erfolgen kann.

Unterstützt wird dies insbesondere auch durch die sekundäre magnetische Lage 38, durch die das magnetische Feld zielgerichtet geführt wird, wodurch die gewünschte gute magnetische Kopplung zwischen den beiden Wicklungen 20,36 unterstützt wird.

Wie aus einer Zusammenschau der Figuren 1 und 3 zu entnehmen ist, weist das Gehäuse 24 im erweiterten Gehäusebereich 30 eine erste radiale Ausdehnung b1 auf, welche größer ist als eine zweite radiale Ausdehnung b2 der Öffnung 16, die im Falle einer kreisrunden Öffnung durch deren Durchmesser bestimmt ist. Hierdurch kommt das Hörgerät 6 mit seinem erweiterten Gehäusebereich 30 an einem Öffnungsrand 42 zu Aufliegen, sodass das Hörgerät 6 eine vorgegebene Ladeposition in Relation zu dem Ladegehäuse 8 einnimmt. Dadurch wird automatisch eine definierte Relativposition zwischen den beiden Ladewicklungen 20,36 eingenommenen. Die beiden Ladewicklungen 20,36 überlappen dabei in Längsrichtung 12 maximal. Im Ausführungsbeispiel ist die primäre Wicklungslänge L1 geringer als die sekundäre Wicklungslänge L2. Bevorzugt sind die beiden Wicklungslängen L1, L2 gleich lang oder zumindest annähernd gleich lang gewählt. Unter annähernd gleich lang wird verstanden, dass die eine Wicklungslänge um bis zu 10% oder 20% länger oder kürzer ist. Je nach Ausgestaltung der primären Ladewicklung 20 kann diese unterschiedliche primäre Wicklungslängen L1 aufweisen. Allgemein ist die primäre Ladewicklung beispielsweise als eine Luftspule ausgebildet. Eine solche weist vorzugsweise eine kurze Wicklungslänge L1 auf.

Zur Verbesserung der induktiven Kopplung ist eine primäre magnetische Lage 44 vorgesehen, die die primäre Ladewicklung 20 umgibt. Speziell kleidet die primäre magnetische Lage 44 die Innenseite des Aufnahmeraums 18 aus, bildet also quasi dessen Innenseite. Bei dieser primären magnetischen Lage 44 handelt sich vorzugsweise um eine Ferrit-Folie oder eine andere permeable Folie. Anstelle einer Folie wird alternativ ein eigensteifes Bauteil aus einem permeablen Werkstoff, beispielsweise Ferrit, mit einem zentralen, den Aufnahmeraum 18 definierenden Loch herangezogen. Auch besteht die Möglichkeit die primäre magnetische Lage 44 durch eine eigensteife Röhre mit einer den Boden 14 bildenden Platte auszubilden. Allgemein ist die primäre magnetische Lage 44 nach einer Art einer Auskleidung des Aufnahmeraums 18 ausgebildet und insbesondere ebenfalls topfförmig. Sie weist am Öffnungsrand insbesondere einen Ringflansch 46 auf, der den Öffnungsrand 42 stirnseitig überdeckt. Im Falle einer massiven Ausgestaltung der primären magnetischen Lage 44 bildet diese beispielsweise zugleich das Ladegehäuse 8 aus.

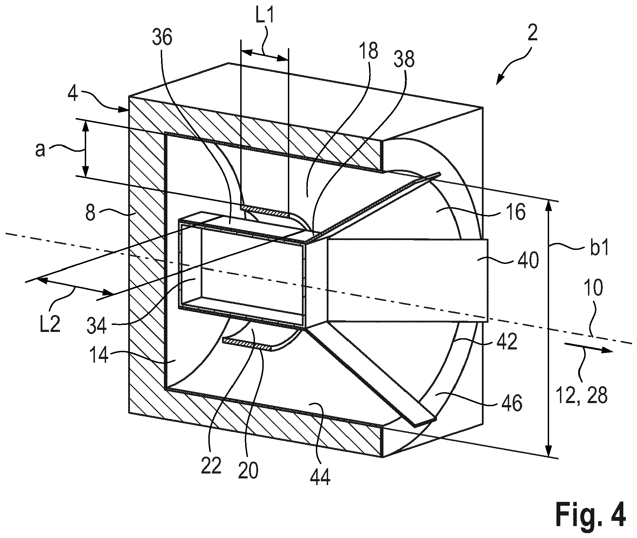

Wie speziell anhand der Figuren 4-6 zu erkennen ist, sind die sekundäre magnetische Lage 38 und die primäre magnetische Lage 44 im Bereich des Öffnungsrands 42 in unmittelbarer Nähe angeordnet, wenn sich das Hörgerät 6 in der Ladeposition befindet. Beim Ladevorgang verlaufen die magnetischen Feldlinien jeweils innerhalb der magnetischen Lagen, ohne dass größere Strecken über die Luft überwunden werden müssen. Nahezu sämtliche Wirbel des Magnetfeldes verlaufen daher insgesamt durch die beiden magnetischen Lagen (Ferritfolien) und werden insbesondere in der sekundären magnetischen Lage 38 quasi gebündelt und verlaufen damit unterhalb der sekundären Ladewicklung 36, d.h. sie verlaufen durch die sekundäre Ladewicklung 36 hindurch. Hierdurch ist eine sehr gute Kopplung zwischen den beiden Ladewicklungen 20,36 erreicht. Im Bereich des Bodens 14 werden die Feldlinien von dem mit der primären magnetischen Lage 44 ausgekleideten Boden 14 wieder in die sekundäre magnetische Lage 38 eingekoppelt.

Um die Führung der Magnetfeldlinien zuverlässig durch die sekundäre magnetische Lage 38 und damit durch den Innenraum der sekundären Ladewicklung 36 zu gewährleisten, ist bei der Ausführungsvariante gemäß der Figur 4 ein ausreichend großer Abstand a in radialer Richtung zwischen der primären Ladewicklung 20 und der primären magnetischen Lage 44 vorgesehen.

Dieser Abstand a kann dabei reduziert werden, wenn beispielsweise die Permeabilitätszahl der sekundären magnetischen Lage 38 höher ist als die der primären magnetischen Lage 44.

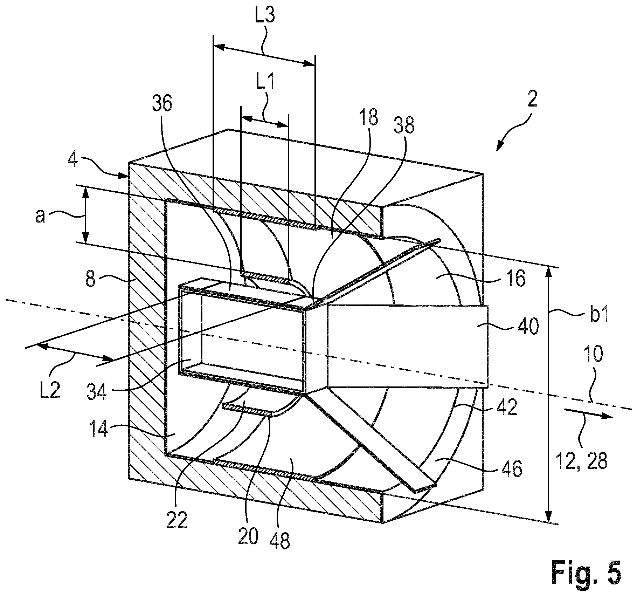

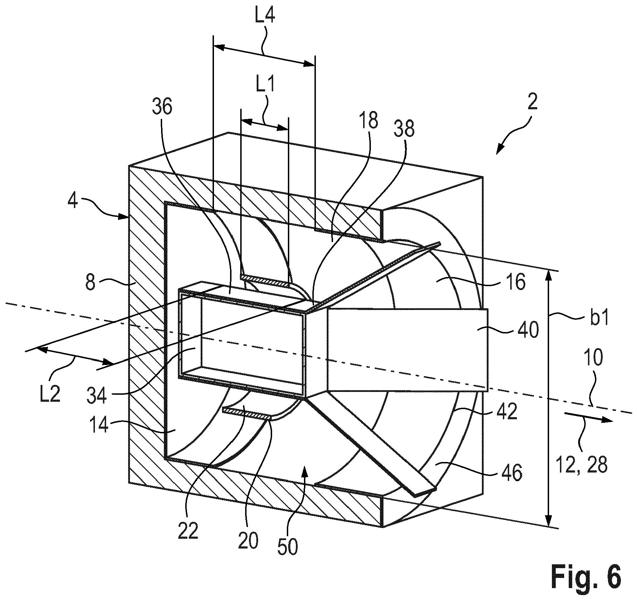

Weitere Möglichkeiten zur Reduzierung dieses Abstands a sind in den Figuren 5 und 6 dargestellt:
Gemäß der Figur 5 ist im Bereich der primären Ladewicklung 20 eine elektrisch leitfähige Lage 48 ausgebildet, die die primäre Ladewicklung 20 ringförmig umgibt. Bei dieser elektrisch leitfähigen Lage 48 handelt es sich insbesondere um eine Metallfolie, speziell um eine Kupfer-Folie. Unter Kostengesichtspunkten können auch günstigere Metalle verwendet werden. Diese elektrisch leitfähige Lage 48 weist vorzugsweise eine sehr geringe Permeabilität mit einer Permeabilitätszahl kleiner 1 auf. Beispielsweise bei der Verwendung von günstigeren Metallen kann die Permeabilitätszahl auch darüber liegen, beispielsweise bis zu einer Permeabilitätszahl von 30. Die leitfähige Lage 48 erstreckt sich nicht vollständig um den Umfang und ist als ein offener Ring ausgebildet. Die leitfähige Lage 48 erstreckt sich vorzugsweise lediglich über einen Teilbereich in Längsrichtung 12 des Aufnahmeraums 18, insbesondere lediglich im Bereich der primären Ladewicklung 20. Die leitfähige Lage 48 weist eine erste axiale Länge L3 auf, die insbesondere zumindest der primären Wicklungslänge L1 entspricht. Die axiale Länge L3 liegt beispielsweise im Bereich zwischen dem 0,7 -fachen und dem 2-fachen der primären Wicklungslänge L1 oder der sekundären Wicklungslänge L2. Alternativ weist sie eine größere Länge auf und kann auch den gesamten Aufnahmeraum 18 mantelförmig auskleiden. Im Bereich der leitfähigen Lage 48 ist daher eine Doppellage ausgebildet, gebildet aus der primären magnetischen Lage 44 und der leitfähigen Lage 48.

Bei der Ausführungsvariante gemäß der Figur 6 ist anstelle der leitfähigen Lage 48 eine Unterbrechung 50 der primären magnetischen Lage 44 ausgebildet, die (vollständig) ringförmig umlaufend ausgebildet ist. Diese Unterbrechung 50 weist eine zweite axiale Länge L4 auf, die bevorzugt etwa zwischen dem 0,7-und 2-fachen der primären Wicklungslänge L1 oder der sekundären Wicklungslänge L2 liegt. Die Unterbrechung 50 ist wiederum auf der axialen Höhe der primären Ladewicklung 20 angeordnet. In beiden Fällen wird daher die primäre Ladewicklung 20 in Längsrichtung 12 von der leitfähigen Lage 48 bzw. Unterbrechung 50 vorzugsweise vollständig überdeckt.

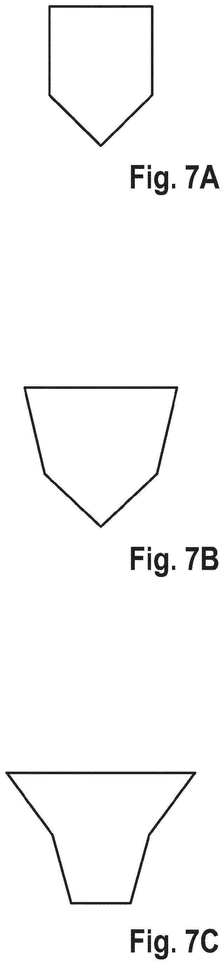

In den Figuren 7A bis 7C sind weitere bevorzugte Geometrien des Ladegehäuses 8 sowie insbesondere des Aufnahmeraums 18 in vereinfachter Weise dargestellt. Gemäß Figur 7A ist dabei im oberen Bereich eine zylindrische Wandung vorgesehen, die sich zum Boden hin verjüngt und beispielsweise dort zu einer Spitze zu läuft. Gemäß Figur 7B ist der oberen zylindrische Bereich der Figur 7A durch einen sich in Längsrichtung 12 konisch erweiternden Bereich ersetzt.

Eine besonders bevorzugte Variante ist in der Figur 7C dargestellt, bei der sich der Aufnahmeraum 18 von einem flachen Boden 14 ausgehend durchgehend bis zur Öffnung 16 erweitert. Dabei sind im Ausführungsbeispiel zwei sich erweiternde Teilbereiche vorgesehen, die sich an einander anschließen. Speziell der obere, zur Öffnung 16 hin orientierte Teilbereich weist einen Wandungsbereich auf, welcher vorzugsweise an den Wandungsbereich des erweiterten Gehäusebereichs 30 des Hörgeräts 6 angepasst ist, speziell sind die entsprechenden Winkel der Wandungen bezüglich der Längsrichtung 12 aneinander angepasst und identisch. Hierdurch wird erreicht, dass die Außenwandung des erweiterten Gehäusebereichs 30 im Wesentlichen parallel zur Wandung des Aufnahmeraums 18 verläuft.

In bevorzugter Ausgestaltung ist insgesamt die Geometrie des Aufnahmeraums 18 an die des Gehäuses 24 des Hörgeräts 6 angepasst. Hierdurch wird eine Selbstzentrierung sowohl in radialer als auch in axialer Richtung erreicht. Durch die angepasste Geometrie wird insbesondere die Kopplung zwischen den beiden Ladewicklungen 20,36 positiv beeinflusst. Speziell gilt dies für Ausführungsvarianten mit der primären magnetischen Lage 44, die beispielsweise als Ferritfolie ausgebildet ist. Diese folgt daher der äußeren Kontur des Hörgeräts 6.

In axialer Richtung wird das Hörgerät 6 insbesondere allgemein derart gehalten, dass es mit seiner vorderen Stirnseite im Bereich der Schallaustrittsöffnung 32 in unmittelbarer Nähe zum Boden 14 angeordnet ist oder auf diesem aufliegt.

Die Erfindung wurde vorliegend im Zusammenhang mit dem speziell ausgebildeten ITE-Hörhilfegerät 6 näher erläutert. Grundsätzlich lässt sich das hier beschriebene Ladesystem auch allgemein auf tragbare Hörgeräte wie beispielsweise Headsets, Wearables usw. übertragen. Die Erfindung ist daher nicht auf die hier beschriebenen Ausführungsbeispiele beschränkt. Vielmehr können auch andere Varianten hieraus abgeleitet werden, ohne den Gegenstand der Erfindung zu verlassen.

### Bezugszeichenliste

- 2: Ladesystem
- 4: Ladevorrichtung
- 6: Hörgerät
- 8: Ladegehäuse
- 10: Mittenachse
- 12: Längsrichtung
- 14: Boden
- 16: Öffnung
- 18: Aufnahmeraum
- 20: primäre Ladewicklung
- 22: Innenraum
- 24: Gehäuse
- 26: vorderer Teilbereich
- 28: Geräte-Längsrichtung
- 30: erweiterter Gehäusebereich
- 32: Schallaustrittsöffnung
- 34: Hörer
- 36: sekundäre Ladewicklung
- 38: sekundäre magnetische Lage
- 40: Laschen
- 42: Öffnungsrand
- 44: primäre magnetische Lage
- 46: Ringflansch
- 48: elektrisch leitfähige Lage
- 50: Unterbrechung

- L1: primäre Wicklungslänge
- L2: sekundäre Wicklungslänge
- L3: erste axiale Länge
- L4: zweite axiale Länge
- b1: radiale Ausdehnung
- b2: radiale Ausdehnung
- a: Abstand

## Patentansprüche

1. Ladesystem (2) mit einer Ladevorrichtung (4) sowie mit einem Hörgerät (6), wobei
- das Hörgerät (6) einen vorderen Teilbereich (26) aufweist, in dem eine sekundäre Ladewicklung (36) angeordnet ist und weiterhin
- eine Komponente aufweist und die sekundäre Ladewicklung (36) um die Komponente angeordnet ist
wobei die Ladevorrichtung (4) aufweist
- ein Ladegehäuse (8) mit einem Aufnahmeraum (18), der sich entlang einer Mittenachse (10) in einer Längsrichtung (12) erstreckt und der in Längsrichtung (12) zumindest zu einer Seite eine Öffnung (16) aufweist,
- eine primäre Ladewicklung (20), welche um die Mittenachse (10) umlaufend ausgebildet ist und einen Innenraum (22) umgibt, wobei
- das Hörgerät (6) mit seinem vorderen Teilbereich (26) in den Innenraum (22) einsetzbar ist,
**dadurch gekennzeichnet, dass** eine primäre magnetische Lage (44) vorgesehen ist, die sich um die primäre Ladewicklung (20) herum erstreckt.

2. Ladesystem (2) nach dem vorhergehenden Anspruch, wobei die Komponente ein Hörer (34) ist.

3. Ladesystem (2) nach einem der vorhergehenden Ansprüche, wobei das Hörgerät (6) sich entlang einer Geräte-Längsrichtung (28) erstreckt und ein Gehäuse (24) aufweist, welches sich in Richtung der Geräte-Längsrichtung (28) verbreitert und dort einen erweiterten Gehäusebereich (30) aufweist, derart dass eine erste radiale Ausdehnung (b1) des erweiterten Gehäusebereichs (30) größer als eine zweite radiale Ausdehnung (b2) der Öffnung (16) ist, so dass das Hörgerät (6) im eingesetzten Zustand in der Ladevorrichtung (4) auf einem Öffnungsrand (42) der Öffnung (16) aufliegt.

4. Ladesystem (2) nach einem der vorhergehenden Ansprüche, wobei eine sekundäre magnetische Lage (38) zwischen der Komponente und der sekundären Ladewicklung (36) angeordnet ist, und die sekundäre magnetische Lage (38) sich in Geräte-Längsrichtung (28) über die Komponente hinaus in den erweiterten Gehäusebereich (30) erstreckt.

5. Ladesystem (2) nach einem der vorhergehenden Ansprüche, wobei eine sekundäre magnetische Lage (38) zwischen der Komponente und der sekundären Ladewicklung (36) angeordnet ist, und die sekundäre magnetische Lage (38) eine höhere Permeabilitätszahl als die erste magnetische Lage (44) der Ladevorrichtung (4) aufweist.

6. Ladesystem (2) nach einem der vorhergehenden Ansprüche, wobei die primäre magnetische Lage (44) eine Innenseite des Aufnahmeraums (18) bildet.

7. Ladesystem (2) nach einem der vorhergehenden Ansprüche, wobei die primäre magnetische Lage (44) an einem Öffnungsrand (42) der Öffnung (16) ausgebildet ist.

8. Ladesystem (2) nach dem vorhergehenden Anspruch, wobei die primäre magnetische Lage (44) einen Ringflansch (46) am Öffnungsrand (42) der Öffnung (16) ausbildet.

9. Ladesystem (2) nach einem der vorhergehenden Ansprüche, wobei die primäre magnetische Lage (44) von der primären Ladewicklung (20) in radialer Richtung beabstandet ist.

10. Ladesystem (2) nach einem der vorhergehenden Ansprüche, wobei in radialer Richtung zwischen der primären Ladewicklung (20) und der primären magnetischen Lage (44) eine elektrisch leitfähige Lage (48) angeordnet ist.

11. Ladesystem (2) nach dem vorhergehenden Anspruch, wobei die elektrisch leitfähige Lage (48) als ein offener Ring ausgebildet ist.

12. Ladesystem (2) nach einem der beiden vorhergehenden Ansprüche, wobei die elektrisch leitfähige Lage (48) sich in Längsrichtung (12) nur über einen Teilbereich (26) der primären magnetischen Lage (44) erstreckt.

13. Ladesystem (2) nach einem der vorhergehenden Ansprüche, wobei die primäre magnetische Lage (44) im Bereich der primären Ladewicklung (20) in Längsrichtung (12) unterbrochen ist.

14. Ladesystem (2) nach einem der vorhergehenden Ansprüche, wobei das Ladegehäuse (8) einen Boden (12) aufweist, und die primäre magnetische Lage (44) den Boden (12) überdeckt.

15. Ladevorrichtung (4) für ein Hörgerät (6), wobei die Ladevorrichtung (4) aufweist
- ein Ladegehäuse (8) mit einem Aufnahmeraum (18), der sich entlang einer Mittenachse (10) in einer Längsrichtung (12) erstreckt und der in Längsrichtung (12) zumindest zu einer Seite eine Öffnung (16) aufweist, über die das Hörgerät (6) zumindest teilweise in den Aufnahmeraum (18) einsetzbar ist,
- eine primäre Ladewicklung (20), welche um die Mittenachse (10) umlaufend ausgebildet ist und einen freien Innenraum (22) umgibt, derart, dass das Hörgerät (6) mit einem vorderen Teilbereich (26) in den Innenraum (22) einsetzbar ist,
**gekennzeichnet durch** eine primäre magnetische Lage (44), die sich um die primäre Ladewicklung (20) herum erstreckt.

## Claims

1. Charging system (2) with a charging device (4) and with a hearing aid (6), wherein
- the hearing aid (6) has a front region (26) in which a secondary charging winding (36) is arranged and furthermore
- has a component and the secondary charging winding (36) is arranged around the component,
wherein the charging device (4) has
- a charging housing (8) with a receiving space (18) which extends along a centre axis (10) in a longitudinal direction (12) and which has an opening (16) in the longitudinal direction (12) at least to one side,
- a primary charging winding (20) which is designed to run around the centre axis (10) and surrounds an interior space (22), wherein
- the hearing aid (6) can be inserted with its front region (26) into the interior space (22),
**characterized in that** a primary magnetic layer (44) is provided, which extends around the primary charging winding (20).

2. Charging system (2) according to the preceding claim, wherein the component is a receiver (34).

3. Charging system (2) according to one of the preceding claims, wherein the hearing aid (6) extends along a longitudinal direction (28) of the device and has a housing (24) that widens in the direction of this longitudinal direction (28) of the device and has an extended housing region (30) there, in such a way that a first radial extent (b1) of the extended housing region (30) is larger than a second radial extent (b2) of the opening (16), so that the hearing aid (6) rests on an opening edge (42) of the opening (16) when inserted in the charging device (4).

4. Charging system (2) according to one of the preceding claims, wherein a secondary magnetic layer (38) is arranged between the component and the secondary charging winding (36), and the secondary magnetic layer (38) extends in the longitudinal direction (28) of the device beyond the component into the extended housing region (30).

5. Charging system (2) according to one of the preceding claims, wherein a secondary magnetic layer (38) is arranged between the component and the secondary charging winding (36), and the secondary magnetic layer (38) has a higher permeability coefficient than the first magnetic layer (44) of the charging device (4).

6. Charging system (2) according to one of the preceding claims, wherein the primary magnetic layer (44) forms an inner side of the receiving space (18).

7. Charging system (2) according to one of the preceding claims, wherein the primary magnetic layer (44) is formed at an opening edge (42) of the opening (16).

8. Charging system (2) according to the preceding claim, wherein the primary magnetic layer (44) forms an annular flange (46) at the edge (42) of the opening (16).

9. Charging system (2) according to one of the preceding claims, wherein the primary magnetic layer (44) is spaced apart from the primary charging winding (20) in the radial direction.

10. Charging system (2) according to one of the preceding claims, wherein an electrically conductive layer (48) is arranged between the primary charging winding (20) and the primary magnetic layer (44) in the radial direction.

11. Charging system (2) according to the preceding claim, wherein the electrically conductive layer (48) is formed as an open ring.

12. Charging system (2) according to one of the two preceding claims, wherein the electrically conductive layer (48) extends in the longitudinal direction (12) only over a region (26) of the primary magnetic layer (44) .

13. Charging system (2) according to one of the preceding claims, wherein the primary magnetic layer (44) is interrupted in the region of the primary charging winding (20) in the longitudinal direction (12).

14. Charging system (2) according to one of the preceding claims, wherein the charging housing (8) has a base (12) and the primary magnetic layer (44) covers the base (12).

15. Charging device (4) for a hearing aid (6), wherein the charging device (4) has
- a charging housing (8) with a receiving space (18) which extends along a centre axis (10) in a longitudinal direction (12) and which has an opening (16) in the longitudinal direction (12) at least on one side, via which the hearing aid (6) can be at least partially inserted into the receiving space (18),
- a primary charging winding (20), which is designed to run around the centre axis (10) and surrounds a free interior space (22) in such a way that the hearing aid (6) can be inserted into the interior space (22) with a front region (26),
**characterized by**
a primary magnetic layer (44) which extends around the primary charging winding (20).

## Revendications

1. Système de charge (2) comprenant un dispositif de charge (4) et un appareil auditif (6),
- l'appareil auditif (6) comportant une sous-zone avant (26), dans laquelle est disposé un enroulement de charge secondaire (36), et en outre
- un composant et l'enroulement secondaire de charge (36) étant disposé autour du composant,
le dispositif de charge (4) comportant
- un boîtier de charge (8) comprenant un espace de réception (18) qui s'étend le long d'un axe central (10) dans une direction longitudinale (12) et qui comporte une ouverture (16) au moins sur un côté dans la direction longitudinale (12),
- un enroulement de charge primaire (20), qui est conçu pour s'étendre autour de l'axe central (10) et qui entoure un espace intérieur (22),
- l'appareil auditif (6) pouvant être inséré avec sa sous-zone avant (26) dans l'espace intérieur (22),
**caractérisé en ce qu'**une couche magnétique primaire (44) est prévue qui s'étend autour de l'enroulement de charge primaire (20).

2. Système de charge (2) selon la revendication précédente, le composant étant un écouteur (34).

3. Système de charge (2) selon l'une des revendications précédentes, l'appareil auditif (6) s'étendant le long d'une direction longitudinale (28) de l'appareil et comportant un boîtier (24) qui s'élargit dans la direction longitudinale (28) de l'appareil et qui comporte une zone de boîtier élargie (30), de manière à ce qu'une première extension radiale (b1) de la zone de boîtier élargie (30) soit supérieure à une deuxième extension radiale (b2) de l'ouverture (16), de sorte que l'appareil auditif (6), à l'état inséré dans le dispositif de charge (4), vienne en appui sur un bord (42) de l'ouverture (16).

4. Système de charge (2) selon l'une des revendications précédentes, une couche magnétique secondaire (38) étant disposée entre le composant et l'enroulement de charge secondaire (36), et la couche magnétique secondaire (38) s'étendant dans la direction longitudinale (28) de l'appareil au-delà du composant jusque dans la zone de boîtier élargie (30).

5. Système de charge (2) selon l'une des revendications précédentes, une couche magnétique secondaire (38) étant disposée entre le composant et l'enroulement de charge secondaire (36), et la couche magnétique secondaire (38) ayant une perméabilité supérieure à celle de la première couche magnétique (44) du dispositif de charge (4).

6. Système de charge (2) selon l'une des revendications précédentes, la couche magnétique primaire (44) formant un côté intérieur de l'espace de réception (18).

7. Système de charge (2) selon l'une des revendications précédentes, la couche magnétique primaire (44) étant formée sur un bord (42) de l'ouverture (16).

8. Système de charge (2) selon la revendication précédente, la couche magnétique primaire (44) formant une bride annulaire (46) sur le bord (42) de l'ouverture (16).

9. Système de charge (2) selon l'une des revendications précédentes, la couche magnétique primaire (44) étant distante de l'enroulement de charge primaire (20) dans la direction radiale.

10. Système de charge (2) selon l'une des revendications précédentes, une couche électriquement conductrice (48) étant disposée dans une direction radiale entre l'enroulement de charge primaire (20) et la couche magnétique primaire (44).

11. Système de charge (2) selon la revendication précédente, la couche électriquement conductrice (48) étant réalisée sous la forme d'un anneau ouvert.

12. Système de charge (2) selon l'une des deux revendications précédentes, la couche électriquement conductrice (48) s'étendant dans la direction longitudinale (12) uniquement sur une sous-zone (26) de la couche magnétique primaire (44).

13. Système de charge (2) selon l'une des revendications précédentes, la couche magnétique primaire (44) étant interrompue dans la direction longitudinale (12) dans la zone de l'enroulement de charge primaire (20).

14. Système de charge (2) selon l'une des revendications précédentes, le boîtier de charge (8) comportant un fond (12), et la couche magnétique primaire (44) recouvrant le fond (12).

15. Dispositif de charge (4) destiné à un appareil auditif (6), le dispositif de charge (4) comportant
- un boîtier de charge (8) comprenant un espace de réception (18) qui s'étend le long d'un axe central (10) dans une direction longitudinale (12) et qui comporte au moins sur un côté dans la direction longitudinale (12) une ouverture (16) par laquelle l'appareil auditif (6) peut être inséré au moins partiellement dans l'espace de réception (18),
- un enroulement de charge primaire (20), qui est conçu pour s'étendre autour de l'axe central (10) et qui entoure un espace intérieur libre (22) de manière à ce que l'appareil auditif (6) puisse être inséré avec une sous-zone avant (26) dans l'espace intérieur (22),
**caractérisé par**
une couche magnétique primaire (44) qui s'étend autour de l'enroulement de charge primaire (20).
